## Europäisches Patentamt
## European Patent Office
## Office européen des brevets

(11) Numéro de publication: **0 241 324**
**A2**

## DEMANDE DE BREVET EUROPEEN

(21) Numéro de dépôt: **87400495.5**

(22) Date de dépôt: **06.03.87**

(51) Int. Cl.⁴: **H 04 L 9/00**
**G 06 F 1/00**

(30) Priorité: **07.03.86 FR 8603249**

(43) Date de publication de la demande:
**14.10.87 Bulletin 87/42**

(84) Etats contractants désignés:
**AT BE CH DE ES GB GR IT LI LU NL SE**

(71) Demandeur: **Brasseur, Alexis Richard Gérard**
**12, rue Philippe Grass**
**Strasbourg (bas Rhin) (FR)**

(72) Inventeur: **Brasseur, Alexis Richard Gérard**
**12, rue Philippe Grass**
**Strasbourg (bas Rhin) (FR)**

(74) Mandataire: **Cabinet Pierre HERRBURGER**
**115, Boulevard Haussmann**
**F-75008 Paris (FR)**

(54) **Procédé et installation de transmission de données.**

(57) a) Système de transmission de données ;

b) caractérisé en ce qu'il se compose d'au moins un clavier (20) et un processeur (30) doté d'une mémoire et, le cas échéant, d'un module de cryptage pour la transmission des donées formant un terminal A à la disposition d'un utilisateur et un centre de traitement B relié au terminal A et se composant d'un moyen de filtrage automatique des données, dont une partie peut être assumée par le processeur 30 si la commodité l'impose, et de demande de duplicata 100 (F.A.D.), d'un moyen de codification automatique avec accusé de réception 200 (P.A.C.), d'un moyen de vérification de la compatibilité hiérarchique 300 (V.A.C.H.), d'une file d'attente 550 reliée au moyen de vérification de la compatibilité hiérarchique V.A.C.H. 300 et reliée en sortie au moyen en codification automatique avec accusé de réception P.A.C. 200, le moyen de vérification V.A.C.H. 300 étant relié à la messagerie électronique 500 communiquant elle-même avec les centres destinataires ou satellites 1000 et une mémoire 600 alimentant un moyen de contrôle de la cohérence entre les données et les éléments significatifs de la codification 400 (E.A.B.) pour permettre soit l'émission automatique de bordereaux d'authentification 900 soit un enregistrement de sauvegarde 800 destiné à être mis dans un coffre-fort 700.

Fig. 1

EP 0 241 324 A2

**Description**

Procédé et installation de transmission de données

La présente invention concerne un procédé et une installation de transmission de données.

On sait que la fiabilité de la transmission de données n'est pas absolue en raison des déficiences des matériels utilisés ou du mode de communication choisi. C'est le cas lorsque le réseau concerné comporte un ou plusieurs centres de traitement de données reliés à un ou plusieurs ensembles de terminaux intelligents ou transparents. On sait aussi que des tiers non autorisés cherchent par malveillance ou par simple curiosité à connaître ou à modifier de telles données à des fins intéressées voire même par simple amusement.

Généralement, la transmission de données entre un ou plusieurs ensembles de terminaux et un ou plusieurs centres de traitement de données donne lieu à la création dans un, plusieurs ou la totalité des centres du réseau d'un espace d'enregistrement
- une "messagerie électronique" - comportant des compartiments
- des "boîtes aux lettres" - pouvant eux-mêmes être subdivisés en plusieurs niveaux hiérarchiquement dépendants, chaque niveau correspondant à un type de données traité. Il y a habituellement correspondance univoque entre l'utilisateur d'un terminal et un compartiment ou boîte aux lettres, comme il y a habituellement adéquation entre le traitement d'un type de données et un centre. En outre, dans un réseau complexe, un des centres joue un rôle prépondérant par rapport aux autres centres, celui d'un centre maître ou celui d'un centre de tri. De ce fait, il représente l'interface privilégié pour l'ensemble des utilisateurs des terminaux. Il détient donc la messagerie électronique la plus complète et la plus structurée de l'ensemble des centres. Les liaisons entre centres ainsi qu'entre centres et utilisateurs des terminaux sont de nature contractuelle et sont généralement régies par des textes juridiques. Les transactions qui en résultent doivent généralement pouvoir être justifiées par des pièces ayant valeur de preuve.

Dans le cas de réseaux complexes, les problèmes techniques les plus importants consistent :

- Premièrement, à vérifier la conformité à l'identique des données émises et des données reçues par paquets de données standardisés par type, dans une zone déterminée de la chaîne liant l'émetteur au récepteur. Le transfert des données entre le terminal et le centre de traitement, peut être soit mono- soit bi-directionnel.

- Deuxièmement, dans la zone même qui contient le dispositif de l'invention, à constituer soit simultanément soit successivement la codification d'émission et de réception des données. Cette codification comportera l'ensemble ou une partie des éléments suivants : l'identité de l'émetteur, la date, l'heure, la durée de validité, un attribut alphanumérique spécifique à chaque paquet standardisé de données et l'identité du ou des récepteurs - intermédiaire(s) et final -. La codification précède ou suit chaque paquet de données. Les codes - et éventuellement les données - sont cryptés par un module de cryptage intégré au dispositif.

- Troisièmement, à vérifier que les données enregistrées sont compatibles avec celles qui sont conservées dans les boîtes aux lettres et dont la validité subsiste. En cas d'incompatibilité, il convient d'aviser l'émetteur et d'effectuer par une procédure ad hoc, un stockage particulier de ces données ou de les rejeter.

- Quatrièmement, à stocker pour la période correspondant au cycle de fonctionnement du système, les données enregistrées et éventuellement les données incompatibles en attente par un transfert unidirectionnel dans une mémoire verrouillée. La cohérence entre les paquets de données et leur codification doit prévenir toute intervention intempestive dans le système. Des bordereaux sont émis pour authentifier les transactions effectuées.

La présente invention se propose de résoudre ces problèmes.

A cet effet, l'invention concerne une installation caractérisée en ce qu'elle se compose d'au moins un clavier 20 et un processeur 30 doté d'une mémoire qui peut éventuellement vérifier la conformité à l'identique des données émises avec celles reçues par le centre B et, le cas échéant, d'un module de cryptage pour la transmission des données formant un terminal A à la disposition d'un utilisateur et un centre de traitement B relié au terminal A et se composant d'un moyen de filtrage automatique des données et de demande de duplicata 100 (F.A.D.), d'un moyen de codification automatique avec accusé de réception 200 (P.A.C.), d'un moyen de vérification de la compatibilité hiérarchique 300 (V.A.C.H.), d'une file d'attente 550 reliée au moyen de vérification de la compatibilité hiérarchique V.A.C.H. 300 et reliée en sortie au moyen de codification automatique avec accusé de réception P.A.C. 200, le moyen de vérification V.A.C.H. 300 étant relié à la messagerie électronique 500 communiquant elle-même avec les centres destinataires ou satellites 1000 et une mémoire 600 alimentant un moyen de contrôle de la cohérence entre les données et les éléments significatifs de la codification 400 (E.A.B.) pour permettre soit l'émission automatique de bordereaux d'authentification 900 soit un enregistrement de sauvegarde 800 destiné à être mis dans un coffre-fort 700.

La solution exposée ci-dessous est susceptible de trouver une application chaque fois qu'il y a lieu :
- de vérifier et d'assurer la fiabilité de la transmission des données,
- et/ou d'identifier et de codifier ces données, et/ou de vérifier la compatibilité entre des données de niveaux hiérarchiques différents,
- et/ou de prévenir l'accès à ces données par des tiers non autorisés tout en produisant des pièces authentifiant les transactions effectuées.

Suivant une autre caractéristique de l'invention, le moyen de filtrage automatique des données et de demande de duplicatas F.A.D. 100 se compose de la fonction d'entrée $B_1$ reliée au terminal A et de la fonction d'entrée $B_3$ reliée à d'autres parties du centre de traitement B ; la fonction de décryptage et d'identification $B_1$ recevant les demandes du terminal A et la fonction $B_3$ recevant la demande d'une autre partie du centre de traitement B pour vérifier la cohérence et l'autorisation de divulgation sont respectivement reliées à une fonction de triage 101, dédoublée pour la clarté du graphique, communiquant à une fonction de tronçonnement de données 102 qui fournit des paquets de données à des registres tampon 109, 110, 111 de niveaux différents par l'intermédiaire de fonctions de répartition 103, 107, 109 ainsi qu'une fonction de génération d'impulsions 104 reliée à un compteur 105, représenté sur le graphique dans ses deux positions possibles, lui-même relié à une fonction d'émission 106 reliée à la fonction de vérification de la cohérence du message de départ avec un éventuel cryptage $B_4$, les registres tampon 109, 110, 111 étant reliés à un comparateur 112 dont la sortie est reliée à une fonction de triage 113 qui, lorsque la comparaison est correcte, fournit un signal à la fonction de remise à l'état initial 117 de l'ensemble du moyen F.A.D. 100 pour commander la fonction de reconstitution du message 114 et transmettre l'information au moyen de codification automatique et d'accusé de réception P.A.C. 200 ainsi qu'à la fonction de confirmation du message 115, elle-même reliée à la fonction de cohérence $B_4$, alors que la sortie du comparateur en cas de comparaison négative est reliée à la fonction de demande de duplicata 116, elle-même reliée à la fonction d'émission 106. Les fonctions 102 à 113 peuvent être incluses dans l'élément 30 et, de ce fait, décharger le F.A.D. de la vérification des messages émis avec les messages reçus par le centre B.

Suivant une autre caractéristique de l'invention, le moyen de codification automatique et d'accusé de réception P.A.C. 200 se compose en entrée d'une fonction de triage 201 qui reçoit les signaux de la fonction de filtrage automatique 100, de la file d'attente 550 ou d'un centre satellite 1000, pour envoyer suivant leur origine les signaux ainsi reçus suivant trois chemins de transmission de signaux, à une fonction 202 recevant les informations en provenance de la fonction de filtrage 100, et qui fournit des impulsions de codification par paquets de données à une fonction de calcul de valeurs 203 dont la sortie est reliée à la fonction de vérification de la compatibilité hiérarchique 300 ainsi qu'à la fonction de cryptage des données 216, la fonction 202 étant également reliée à une fonction 206 qui précise le numéro de cycle pour l'algorithme de cryptage, cette fonction 206 étant reliée en sortie à un registre 207 pour la date et éventuellement l'heure du message, le moyen de codification P.A.C. 200 comportant également un horodateur 204 commandant le registre 207 ainsi qu'un compteur de cycle 205, le compteur de cycle commandant une fonction d'initialisation de l'algorithme de cryptage de codification 213 et une fonction d'initialisation de l'algorithme de cryptage de données 214, ces deux fonctions 213 et 214 étant reliées à un algorithme de cryptage 215, lui-même relié à la fonction de cryptage des données 216, le compteur de cycle 205 étant également relié à la fonction 209 qui exprime la durée de validité en cycles de fonctionnement, et qui est reliée à la fonction de triage des ordres 208, ainsi qu'une fonction 210 qui insère dans la codification un critère d'éxécution destiné à être mis en oeuvre par un centre destinataire 1000, cette fonction 210 étant également reliée à la fonction de triage des ordres 208 pour alimenter une fonction 211 qui attribue un numéro d'ordre, elle-même reliée à une fonction 212 qui attribue à chaque paquet de données l'accusé de réception définitif, les fonctions 215, 212 étant reliées à une fonction de cryptage 217 qui crypte le code selon l'algorithme de cryptage 215, pour fournir les données à une fonction d'assemblage 218 qui reconstitue le message complet, ce dernier étant envoyé à la messagerie électronique 500, à la file d'attente 550 ou à une file d'attent cyclique 560.

L'invention concerne également un procédé caractérisé en ce que :

a) on vérifie que les données essentielles du dialogue entre les terminaux et les centres correspondent exactement à celles émises par leurs sources,

b) on codifie ces données selon des critères dont certains doivent être significatifs, on crypte la codification selon un algorithme aléatoire pouvant varier à chaque cycle de fonctionnement du système, on crypte éventuellement les données selon un algorithme différent du précédent,

c) on vérifie que ces données peuvent être acceptées soit immédiatement soit après un délai d'attente par le centre de traitement, compte tenu des contraintes régissant le fonctionnement du système,

d) on alerte le système de surveillance du centre de traitement lorsqu'une tierce partie modifie ou s'approprie par effraction les données du centre,

e) on produit les pièces authentifiant les transactions entre le centre et les terminaux afin que les instructions données par les utilisateurs du système ne donnent pas lieu à des litiges.

Suivant une autre caractéristique de l'invention, pour vérifier les données essentielles du dialogue entre les terminaux et les centres afin qu'elles correspondent exactement à celles émises par leurs sources, on compare les données d'un message original avec celles du message dupliqué une ou plusieurs fois, le centre de traitement B commandant, par impulsions, l'instruction de duplication à une fonction intégrée au centre B si le message en provient, et à une fonction intégrée à chacun des terminaux lorsque le message a pour source l'un des terminaux, on fait répéter cette instruction jusqu'à ce que la comparaison d'une paire de messages, original et duplicata unique ou duplicatas successifs, ne présente plus aucune divergence.

Suivant une autre caractéristique de l'invention, on compose un numéro de code et d'appel sur le terminal de l'utilisateur.

Suivant une autre caractéristique de l'invention, pour codifier les données selon des critères dont certains doivent être significatifs et pour crypter la codification selon un algorithme aléatoire variant à chaque cycle de fonctionement du système et, éventuellement, pour crypter les données selon un algorithme différent de celui de la codification, on associe un code à un paquet de données en intégrant dans la codification certains éléments significatifs figurant dans les données, tels que la date d'émission, la durée de validité, l'identité de l'émetteur et du récepteur, un accusé de réception émis par le centre de traitement lui-même ou par un autre centre destinataire de l'environnement du système.

Suivant une autre caractéristique de l'invention, lorsque les données doivent n'être accessibles à aucun tiers, on crypte aussi les données mais de manière différente du cryptage du code.

Suivant une autre caractéristique de l'invention, pour vérifier que les données peuvent être acceptées soit immédiatement, soit après un délai d'attente par le centre de traitement compte tenu des contraintes de fonctionnement du système, on teste la compatibilité de ces données ainsi que les effets des instructions qui les accompagnent avec les données et les disponibilités d'exécution déjà enregistrées et on poursuit le traitement en l'absence d'incompatibilité alors qu'en cas d'incompatibilité on met les données et leur codification en attente.

Suivant une autre caractéristique de l'invention, pour alerter le système de surveillance du centre de traitement qu'une tierce partie modifie ou s'approprie par effraction les données du centre, on compare les éléments significatifs du code crypté avec les éléments correspondants des données cryptées selon une méthode différente et on vérifie par cette comparaison s'il y a eu effraction en vue de modifier ces éléments ou de s'approprier les données.

Suivant une autre caractéristique de l'invention, pour produire les pièces authentifiant les transactions entre le centre et les terminaux afin que les instructions données par les utilisateurs du système n'occasionnent par de litige, on émet des bordereaux authentifiant les transactions du système.

La présente invention sera décrite de façon plus détaillée à l'aide des dessins annexés dans lesquels :

- La figure 1 est un schéma d'ensemble par blocs à la manière d'un organigramme d'une installation.
- La figure 2 représente le schéma de la figure 1, pour un autre mode de fonctionnement.
- La figure 3 est un schéma-bloc du moyen de filtrage automatique des données F.A.D.
- La figure 4 est un schéma du moyen de codification automatique et l'accusé de réception P.A.C.
- La figure 5 est un schéma du moyen de contrôle de compatibilité entre les données archivées et les données nouvelles V.A.C.H., du moyen de contrôle de cohérence entre les données et les éléments significatifs de leur codification et d'émission automatique de bordereaux (E.A.B.)
- La figure 6 est un schéma général montrant l'application du procédé et de l'installation de l'invention à un premier cas particulier.
- La figure 7 est un schéma montrant l'application du procédé et de l'installation de l'invention à un second cas particulier.

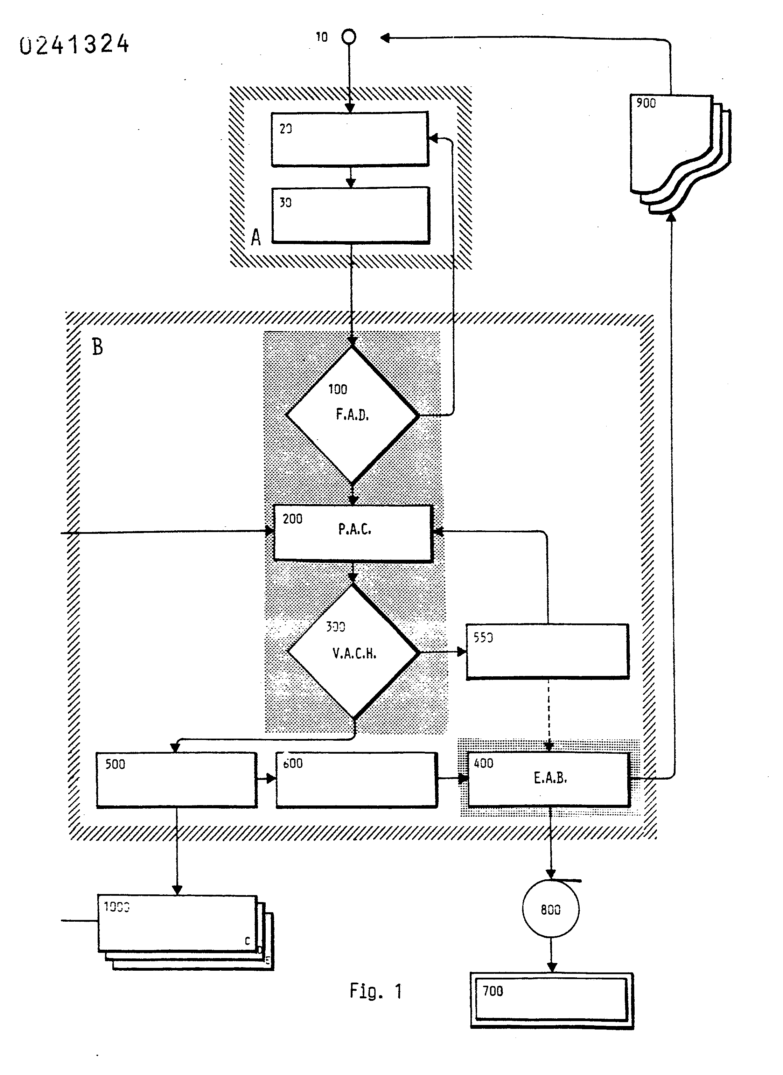

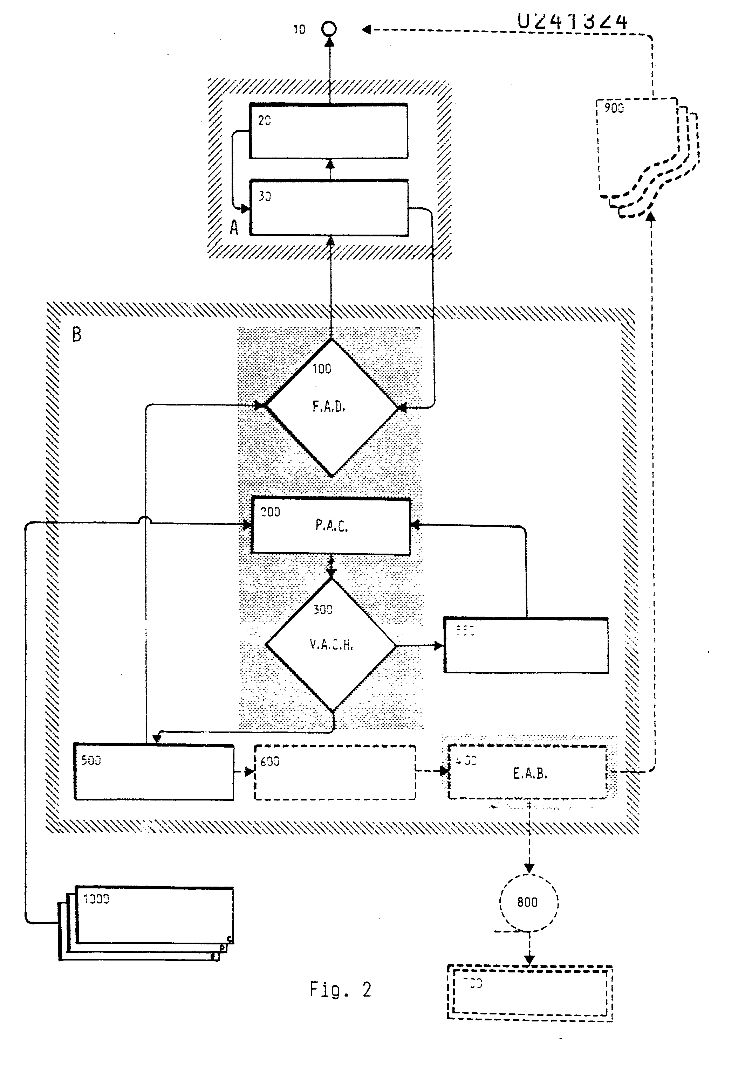

Le procédé et l'installation pour la mise en oeuvre de celui-ci seront décrits de façon générale à l'aide des figures 1 et 2 qui sont des schémas-blocs d'ensemble de l'invention.

Selon la figure 1, l'installation se compose d'un terminal A comprenant un clavier 20 et un processeur 30. Le processeur 30 enregistre les instructions de l'utilisateur 10, et les crypte pour leur transmission. Ce processeur 30 peut assurer les fonctions de comparaison à l'identique dans le cas où le F.A.D. 100 en est déchargé. Le terminal A est relié par une double liaison au centre de traitement B. Ce centre de traitement se compose d'un moyen de filtrage automatique de l'information et de demandes de duplicata F.A.D. 100 recevant les informations du terminal A et susceptible de demander le renvoi d'un duplicata en provenance du terminal A. Ce moyen F.A.D. 100 est relié à un moyen de codification automatique et d'accusé de réception P.A.C. 200 relié lui-même à un moyen de vérification de la compatibilité hiérarchique V.A.C.H. 300. Ce moyen V.A.C.H. 300 communique soit avec la messagerie électronique 500, c'est-à-dire un ensemble de boîtes aux lettres électroniques non représentées schématiquement et d'autre part, avec une file d'attente 550. La messagerie électronique 500 est reliée à des centres satellites 1000 destinataires de certaines parties du message. Ces centres 1000 peuvent également communiquer en retour avec la messagerie 500 par le canal du moyen P.A.C. 200 et du moyen V.A.C.H. 300. La messagerie électronique 500 est reliée à une mémoire 600 cette dernière étant reliée à un moyen de contrôle de la cohérence entre les données et les éléments significatifs de la codification E.A.B. 400. Ce moyen E.A.B. 400 peut transmettre les informations à des mémoires non fugitives 800, tels que des microfilms, etc... qui peuvent se conserver dans un moyen protégé tel qu'un coffre fort 700.

Le moyen de contrôle de la cohérence E.A.B. 400 peut également émettre automatiquement des pièces d'authentification 900 destinées à l'utilisateur 10.

La figure 1 montre la mise en oeuvre du procédé et de l'installation tout d'abord dans le sens utilisateur vers centre de traitement B et centres satellites 1000, puis, éventuel retour d'informations vers l'utilisateur sous la forme de pièces d'identification 900. La figure 2 montre la mise en oeuvre du procédé et de l'installation de manière inverse c'est-à-dire de transmission d'informations des centres 1000 et du centre B vers l'utilisateur 10. Ces deux directions de transmission d'informations seront explicitées ci-après :

La transmission de données qui modifient l'état de la messagerie électronique dans le centre de traitement B pour la prise en compte des instructions fournies par un utilisateur autorisé est décrite ci-après à l'aide de la figure 1.

Dans le cas de la figure 1, les étapes du procédé selon l'invention sont mises en oeuvre de la manière décrite ci-dessous. A la suite de la mise sous tension d'un terminal A par un utilisateur 10 et de sa connexion avec un centre de traitement B, selon un mode de communication bi-directionnel - réseau commuté, réseau de transmission de données par paquets, ou tout autre mode de communication - et après que les transactions d'identification entre l'utilisateur et le centre aient confirmé le maintien de la connexion, l'utilisateur 10 introduit par le clavier 20 dans le processeur 30 les données à transmettre. Ces données représentent une addition à la messagerie électronique 500 ou, les cas échéant, une modification de son contenu. Elles résultent soit d'un message dont la seule source est l'utilisateur autorisé, soit d'un dialogue entre l'utilisateur et le centre B, l'utilisateur ayant alors fait usage des capacités de traitement et de calcul propres au centre B pour structurer et constituer son message. Le message es transmis au centre B par le réseau choisi, après avoir été éventuellement crypté pour la transmission par le processeur 30. A réception au centre B, le message transite dans le dispositif de l'invention comportant les moyens 100, 200, 300 et 400. Ce dispositif assure :

- pour le moyen 100, le filtrage automatique des données (F.A.D.) pour vérifier le conformité à l'identique des données tronçonnées en paquets standard et d'un duplicata obtenu par instruction de l'ensemble 100 au processeur 30, sauf si le processeur 30 procède lui-même à cette vérification.

- pour le moyen 200, le processus automatique de codification (P.A.C.) identifiant le message, la codification prévoyant un accusé de réception par le centre B ou le centre concerné du niveau 1000.

- pour le moyen 300, la vérification automatique de la compatibilité hiérarchique des données (V.A.C.H.) qui aiguille les paquets de données soit vers la messagerie électronique 500 et les centres correspondants du niveau 1000, soit vers la file d'attente 550, selon que ces données sont ou ne sont pas compatibles avec celles déjà contenues dans la messagerie électronique 500.

- pour le moyen 400, le contrôle de la cohérence entre les données et les éléments significatifs de la codification, et d'autre part, l'émission automatique de pièces d'authentification (E.A.B.) qui, à chaque cycle de fonctionnement du système, produit un bordereau général 800 - sur microfilm, bande, disque, etc. - de l'ensemble des données contenues dans la mémoire 600. En effet, la totalité des données contenues dans la messagerie électronique 500 est transférée dans la mémoire 600. Le moyen 400 peut, en outre, produire des bordereaux individuels 900 indiquant à l'utilisateur, à des échéances déterminées, la situation de sa boîte aux lettres et, le cas échéant, le relevé des données le concernant qui sont stockées sur la file d'attente 550. Le bordereau général 800 et les copies des bordereaux individuels 900, sont conservés dans un coffre-fort 700 avec les sûretés correspondantes.

La transmission de données n'entraînant aucune modification de la messagerie électronique du centre de traitement, c'est-à-dire la consultation des données par un utilisateur, autorisé est décrite ci-après à l'aide de la figure 2.

Dans le cas de la figure 2, les étapes du procédé de l'invention sont mises en oeuvre de la manière suivante : la messagerie électronique 500 peut être alimentée en données par deux sources autres que celles des utilisateurs. Ce sont :

- les centres de traitement du niveau 1000 qui produisent des données venant d'additionner par le canal du moyen P.A.C. 200 et du moyen V.A.C.H. 300 aux données des niveaux correspondant à ces centres dans les boîtes aux lettres de la messagerie électronique 500 du centre B ou, le cas échéant, modifier leur contenu,

- la file d'attente 550 qui contient des données devenues compatibles avec celles de la messagerie électronique 500 à la suite des additions ou des modifications apportées au contenu des boîtes aux lettres par le transfert des données provenant des centres du niveau 1000. Ainsi, et au moins une fois avant la fin de chaque cycle de fonctionnement du système, l'ensemble des données de la file d'attente 550 transitera par les moyens P.A.C. 200 et V.A.C.H. 300 pour intégrer la messagerie électronique 500 lorsque la compati bilité hiérarchique le permet.

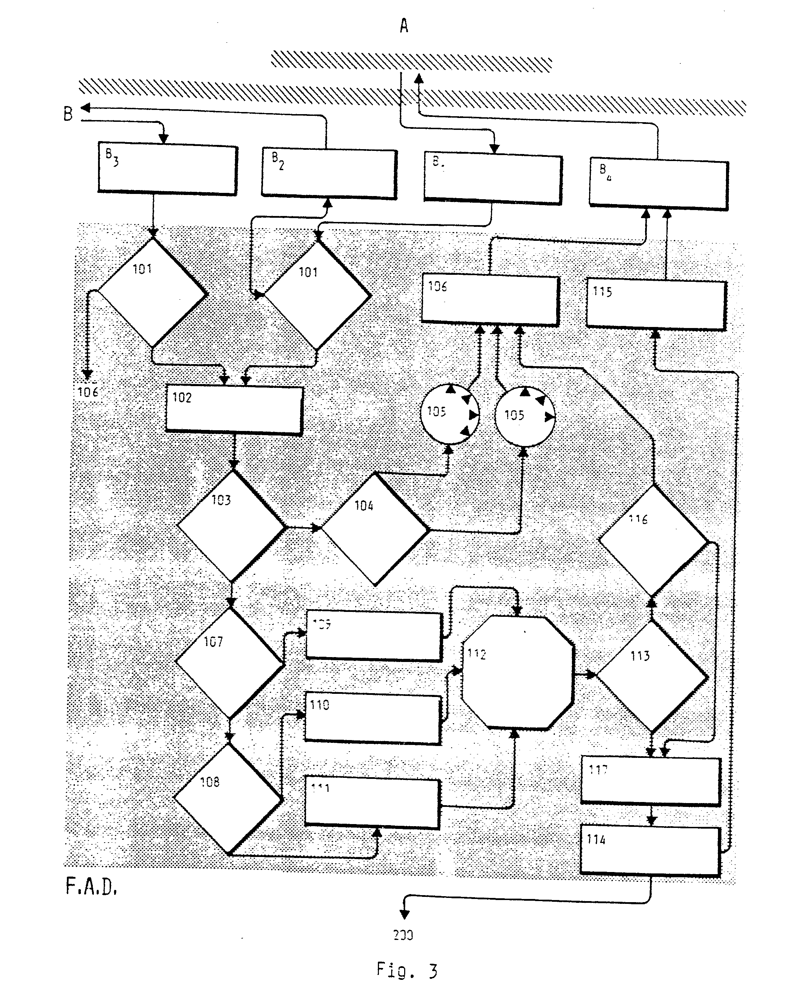

Si un utilisateur 10 désire consulter sa boîte aux lettres dans la messagerie électronique 500, il transmet l'instruction qui lui donne accès aux informations désirées après avoir mis sous tension le terminal A et effectué les transactions d'identification qui confirment la connexion avec le centre B. Ces informations transitent par le moyen F.A.D. 100 qui provoque le retour des informations reçues au terminal A pour vérifier la conformité à l'identique avec le message initial transmis par le centre B. Le renvoi des informations du terminal A vers le centre B est déclenché par le moyen F.A.D. 100 qui active dans le processeur 30 la fonction ad hoc. Ce sont les moyens F.A.D. 100, P.A.C. 200, V.A.C.H. 300 et E.A.B. 400 qui constituent l'invention. Le fonctionnement de chacun de ces moyens est détaillé ci-après et illustré respectivement par les figures 3 - moyen F.A.D. 100 -4 - moyen P.A.C. 200 - et 5 - moyens V.A.C.H. 300 et E.A.B. 400 -

La figure 3 montre l'ensemble du moyen de filtrage automatique de l'information et de demande de duplicatas F.A.D. 100. Ce moyen se compose d'une fonction d'accueil $B_1$ pour le décryptage d'une éventuelle transmission cryptée et l'identification, ainsi qu'une fonction $B_4$ de vérification de la cohérence du message envoyé et de l'éventuel cryptage du message. Les deux fonctions $B_1$ et $B_4$ constituent les interfaces avec le terminal A.

Le moyen comporte également une fonction $B_3$ de vérification de la cohérence et de l'autorisation de divulgation, qui reçoit les informations venant d'autres organes du centre B, et une fonction $B_2$ reliée au moyen de triage et qui filtre les informations transmises par la fonction $B_1$ pour retenir les informations significatives, par exemple les instructions de consultation de la messagerie.

La fonction $B_1$ est reliée à la fonction de triage 101 qui trie les données contenues dans le message pour les faire passer dans le différentes fonctions en aval du moyen 100. De la même manière, la fonction $B_3$ est reliée à ce moyen de triage 101 dissocié sur la figure 3 pour clarifier les circuits.

La fonction de triage 101 est reliée à une fonction de tronçonnage de données 102 qui tronçonne les données en paquets lorsqu'elles proviennent du terminal A. La fonction 102 transmet à la fonction 103, les données, paquet par paquet et cela suivant sa remise à zéro par la fonction de remise à zéro 117 décrite ultérieurement.

La fonction 103 est reliée en sortie à la fonction 107 et l'est éventuellement à la fonction 108. La fonction 103 est également reliée à la fonction d'impulsion 104 qui commande les compteurs 105, 105' eux-mêmes reliés à la fonction d'émission 106 qui envoie le message complet au terminal A et demande le renvoi des paquets standard vers le centre B en activant le processeur 30 du terminal A.

La fonction 107 envoie son paquet de données dans le tampon 109 de même que la fonction 108 envoie ses données dans les tampons 110 et 111. Ces différents tampons 109, 110, 111 sont reliés au comparateur 112' qui les compare. En sortie, le comparateur 112 est relié à la fonction 113. Celle-ci envoie le paquet de données acceptées à la fonction 114 à travers la fonction de remise à zéro 117 qui commande la remise à zéro de l'ensemble du moyen 100. Les données refusées sont transmises par la fonction 113 à la fonction 116 reliée à la fonction 106. La fonction 114 est reliée à la fonction 115. Cette dernière transforme le statut du message de "message-test" en "message définitif". Les fonctions 102 à 113 peuvent être assurées par le processeur 30 et ainsi décharger le F.A.D. 100 de cette partie du traitement.

La mise en oeuvre de la fonction 100 dont la structure vient d'être décrite ci-dessus et à l'aide de la figure 3 est la suivante :

Le message à transmettre provient soit du terminal A soit d'un autre organe du centre B :
- S'il provient du terminal A, il est traité par la fonction d'accueil B1 qui :
. le décrypte si la transmission a été cryptée,
. procédé aux transactions d'identification entre l'utilisateur du terminal A et le centre B.
- Si le message provient d'un autre organe du centre B - par exemple de la messagerie -, il est traité par la fonction B3 qui :
. reconstitue la cohérence de l'ensemble du message,
. vérifie que l'utilisateur du terminal A est autorisé à en prendre connaissance.
- Ensuite la fonction 101 trie dans le message les données qui sont retenues pour transiter par les différentes fonctions du F.A.D. :
. lorsque la source du message est le terminal A, la fonction 101 :
- bascule les données retenues dans la fonction 102,
- transmet les autres informations à la fonction B2 qui retient les informations significatives (par exemple, les instructions de consultation de la messagerie) et élimine les autres.

. Lorsque la source du message est un autre organe du centre B, la fonction 101 :
- transmet les paquets standard de données à la fonction 102,
- transmet le message complet à la fonction 106 pour qu'il soit envoyé au terminal A. Arrivé au terminal A, le message complet prend d'abord le statut de "message-test".
- La fonction 102 tronçonne les données retenues en paquets standard lorsqu'elles proviennent du terminal A. Que les données proviennent du terminal A ou d'un autre organe du centre B, la fonction 102 les introduit dans la fonction 103 paquet par paquet ; le paquet suivant n'accède à la fonction 103 que lorsque les fonctions 103 à 113 sont remises à zéro par la fonction 117.
- La fonction 103 transmet le paquet standard à la fonction 107 et impulse la fonction 104 lorsque ce transfert est achevé. A chaque passage d'un paquet de données, le compteur 105 enregistre une unité.
- La fonction 104 impulse le compteur 105 et la fonction 106 :
. lorsque le message a pour source le terminal A, le compteur 105 admet au maximum le passage de trois paquets identiques (position 3 maximum) ; la fonction 106 active le processeur 30 du terminal A (voir figure 1) pour transmettre une nouvelle fois le message du terminal A vers le centre B.
. lorsque le message provient d'un autre organe du centre B, le compteur 105 ne peut dépasser la position 2 au maximum ; la fonction 106 envoie alors le message complet au terminal A et demande le renvoi des paquets standard vers le centre B en activant le processeur 30 (voir figure 2).
- La fonction 107 bascule le paquet des données originales dans la fonction 109. Si en revanche il s'agit d'un duplicata :
. soit le message provient du terminal A et, dans ce cas, la fonction 108 bascule le premier duplicata dans la fonction 110 et, le cas échéant, le deuxième duplicata dans la fonction 111,
. soit le message a pour source un autre organe du centre B, et dans ce cas, la fonction 108 n'est pas utilisée : le duplicata renvoyé par le terminal A est logé dans la fonction 110.
- Le comparateur 112 analyse par paires les paquets logés dans les fonctions 109 et 110, éventuellement les paquets logés dans les fonctions 109 et 111 et, s'il y a lieu, les paquets logés dans les fonctions 110 et 111.
- Quand la fonction 112 ne décèle aucune divergence dans une paire de paquets, la fonction 113 transmet le paquet de données acceptées à la fonction 114. L'accès à cette dernière passe par la fonction 117 qui remet l'ensemble des fonctions 100 à zéro : le moyen F.A.D. est alors prêt à recevoir un nouveau paquet et données. En revanche, lorsque dans les paires analysées, la fonction 112 décèle une divergence significative, la fonction 113 active la fonction 116.
- Si le message provient du terminal A, la fonction 116 active la fonction 106 pour :
. demander un second duplicata, s'il n'en a été émis qu'un seul,
. recommencer la transmission du message intégral ou du paquet de données litigieuses, si deux duplicatas ont déjà été transmis, le procédure complète du F.A.D. étant remise en route.

- Si au contraire, le message provient du centre B, la fonction 116 active la fonction 117 qui remet le F.A.D. à zéro et demande à la fonction B3 de reproduire le message initial.

- La fonction 114 mémorise chaque paquet de données acceptées jusqu'à ce que le total des paquets compris dans le message soit reconstitué. Lorsque le message a pour source le terminal A, la fonction 114 bascule les paquets dans la fonction 200. Lorsque le message a pour source un autre organe de B, la fonction 114 active la fonction 115 qui transforme le statut du message de "message-test" en "message définitif".

- La fonction B4 assure la cohérence du message au départ du centre B et le cryptage éventuel de sa transmission vers le terminal A.

Il faut relever que l'ensemble des fonctions du moyen F.A.D. 100 peut être dédoublé pour obtenir une plus grande fluidité du dialogue entre les terminaux A et le centre B. C'est pour cette raison que le processeur 30 peut être investi des fonctions 102 à 113 de vérification à l'identique des données émises avec celles reçues. Chaque moitié de cet ensemble double est alors affectée à une seule direction du dialogue. En outre, les fonctions 107 à 111 peuvent être multipliées si l'objet du moyen F.A.D. l'exige. Tel serait le cas pour vérifier le numéro d'accès à un central, l'utilisateur du terminal n'ayant alors à composer le numéro exact qu'une seule fois pour obtenir la communication avec son correspondant.

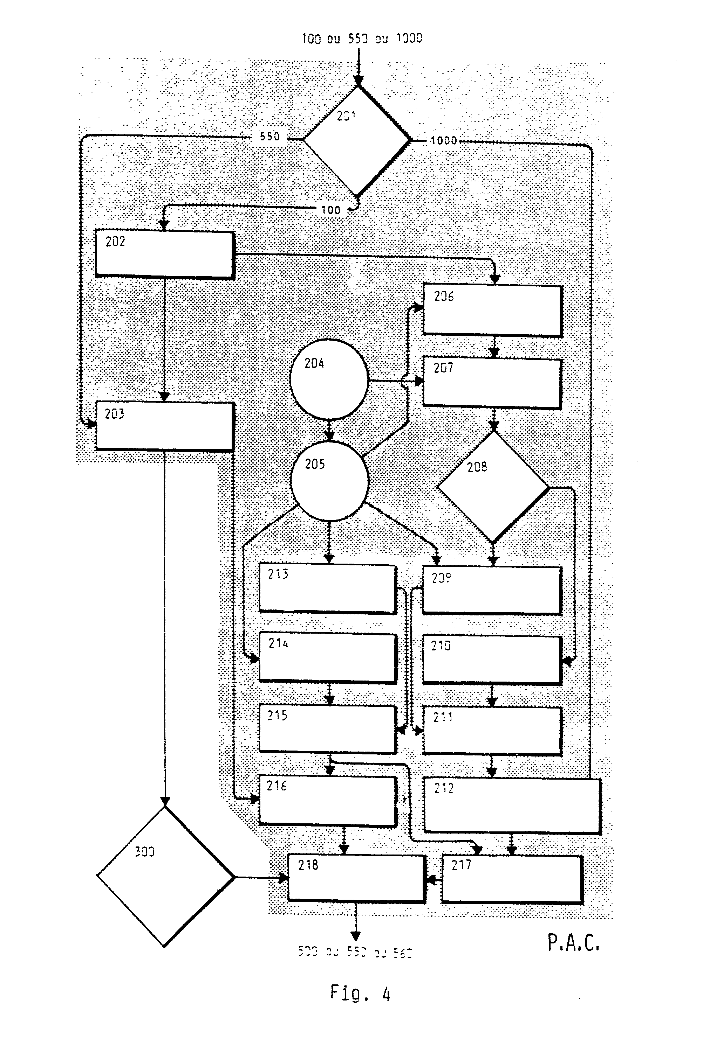

Le moyen de contrôle de la cohérence entre les données et les éléments significatifs de la codification et d'émission automatique éventuelle de pièces d'authentification 200 sera décrit ci-après à l'aide de la figure 4.

Ce moyen P.A.C. 200 se compose d'une fonction de triage 201 qui est reliée au terminal A par l'intermédiaire du moyen de filtrage 100, à la file d'attente 550 ou aux centres 1000.

Suivant que l'information a telle ou telle origine, elle est répartie dans l'une des trois filières et à cet effet, la fonction de triage 201 est reliée à une fonction 202 qui fournit des impulsions de codification par paquets de données. Ce moyen est relié soit à une fonction de calcul des valeurs 202, soit à une fonction 206 qui précise le cycle pour l'algorithme de cryptage, ce dernier moyen étant lui-même relié à un registre 207 pour la date et éventuellement l'heure du message. En sortie, le registre 207 est relié à une fonction de triage des ordres 208. Le moyen 200 comporte un horodateur 204 relié au registre 207 ainsi qu'à un compteur de cycle 205, ce dernier étant relié d'une part à la fonction 206 qui précise le numéro du cycle pour l'algorithme de cryptage et, d'autre part, aux fonctions 109, 213 et 214.

La fonction 213 fournit l'initialisation de l'algorithme de cryptage de la codification et la fonction 214 l'initialisation de l'algorithme de cryptage des données. Les fonctions 213 et 214 sont reliées à la fonctions 215 qui émet l'algorithme. La fonction 209 exprime la durée de validité sous la forme d'un nombre de cycles de fonctionnement. Cette fonction 209 est reliée à la fonction 211 qui attribue à chaque paquet un numéro d'ordre significatif. La fonction 210 insère dans la codification un critère d'exécution destiné à être mis en oeuvre par le centre 1000 dès réception des données. Cette fonction 210 est reliée à la fonction 211. La fonction 211 est reliée à la fonction 212 qui attribue à chaque paquet l'accusé de réception définitif ou lui alloue l'espace nécessaire à cette attribution.

La fonction 217 assure le cryptage du code selon un algorithme émis par la fonction 215. La fonction 216 assure le cryptage des donées selon un algorithme émis par la fonction 215.

Les fonctions 216 et 217 sont reliées à la fonction 218 qui assemble les paquets pour former le message complet. La commande de cette fonction 218 est assurée par le moyen 300 qui, non seulement assure la vérification de la compatibilité hiérarchique mais assure également la commande impulsionnelle de cette fonction 218.

Le moyen P.A.C. 200 décrit ci-dessus met en oeuvre l'invention de la manière suivante :

- la fonction 201 trie les données selon qu'elles proviennent du moyen F.A.D. 100, de la file d'attente 550 ou de l'un des centres du niveau 1000 :

. cette dernière éventualité se produit lorsque pour une raison quelconque, un centre du niveau 1000 n'a pas délégué au centre B l'autorité d'émettre en son nom l'accusé de réception final des donées et que, de plus, il n'y a pas de liaison en temps réel entre ce centre du niveau 1000 et le centre B. Il est à noter que cet accusé de réception final doit être émis durant le même cycle de fonctionnement du système dans lequel les données sont transmises par le terminal A. An effet, la fonction 201 bascule dans la fonction 212 les deux parties du code attachées à chaque paquet de données. La première partie du code est cryptée lors d'un premier passage du paquet dans le P.A.C. ; la seconde en revanche, qui représente l'accusé de réception final, n'est pas encore cryptée. La fonction 201 propose ce code composite à la fonction 212 pour cryptage par la fonction 217. L'ensemble des paquets est ensuite reconstitué par la fonction 218 pour être stocké dans la messagerie 500.

. Lorsque les données proviennent de la file d'attente 550, chaque paquet est doté d'un code complet : les fonctions 203 à 216 sont ainsi court-circuitées, les données étant directement répercutées sur la fonction 203.

. Lorsque les paquets de données proviennent du moyen F.A.D., la fonction 202 active l'ensemble des fonctions 203 à 216 pour établir la codification individuelle de chaque paquet. La création du code se fait simultanément à l'activation de l'ensemble des fonctions V.A.C.H. 300 décrites plus loin.

- La fonction 203 calcule les valeurs pour l'ensemble des paquets de données d'un message, qu'ils proviennent du moyen F.A.D. ou de la file d'attente 550. Ces valeurs sont confrontées avec celles des autres niveaux de la boîte aux lettres de l'utilisateur du terminal A : la fonction 203 transmet l'ensemble de ces valeurs à la fonction 300. Elle bascule simultanément l'ensemble des paquets sur la fonction 216. Si le système prévoit le cryptage des données elles-mêmes, l'algorithme du cryptage des données est initialisé différemment par rapport au cryptage de la codification. Si le système ne prévoit pas de cryptage des données, l'ensemble des paquets bascule directment dans la fonction 218.

- L'horodateur 204 alimente la fonction 207 et impulse le compteur des cycles de fonctionnement du système 205. Il est à noter que la périodicité des cycles de fonctionnement peut être irrégulière : elle peut, par exemple, être quotidienne pour les jours ouvrables et porter sur plusieurs jours en fin de semaine où à l'occasion de congés.

- Le compteur 205 alimente les fonctions 206 et 209 et impulse les algorithmes d'initialisation du cryptage 213 et 214. Le premier est affecté au cryptage de la codification et le second au cryptage des données, si celui-ci est prévu par le système.

- Le processus de codification est impulsé par la fonction 202 pour chaque paquet individuel de données.

- La fonction 206 précise le numéro du cycle de fonctionnement du système qui commande l'algorithme de cryptage.

- La fonction 207 enregistre la date et éventuellement l'heure du message.

- La fonction 208 trie les ordres en fonction de l'existence ou non d'une durée de validité des données. Si les données ont une durée de validité, la codification en tient compte grâce à la fonction 209 qui exprime cette durée en nombre de cycles de fonctionnement. Dans le cas contraire, la fonction 210 prévoit dans la codification un critère d'exécution destiné à être mis en oeuvre par le centre du niveau 1000 dès réception des données.

- La fonction 211 attribue à chaque paquet un numéro d'ordre non significatif.

- La fonction 212 attribue à chaque paquet l'accusé de réception définitif, si le centre B est habilité à le faire. Sinon, elle alloue l'espace nécessaire à l'attribution de cette partie du code par le centre concerné du niveau 1000.

- La fonction 217 crypte le code selon un algorithme émis par la fonction 215. Comme il a déjà été dit, ce cryptage est différent du cryptage éventuel des données. Cette différence est justifiée par le fait que les éléments significatifs de la codification se retrouvent dans les données elles-mêmes. La cohérence du code et du paquet de données est contrôlée par l'ensemble 400 décrit ci-après.

- La fonction 218 assemble les paquets - et leurs codes respectifs - d'un message complet. Cette fonction est impulsée par l'ensemble des fonctions V.A.C.H. 300 pour basculer le message dans la messagerie 500, la file d'attente 550 ou la file d'attente 560.

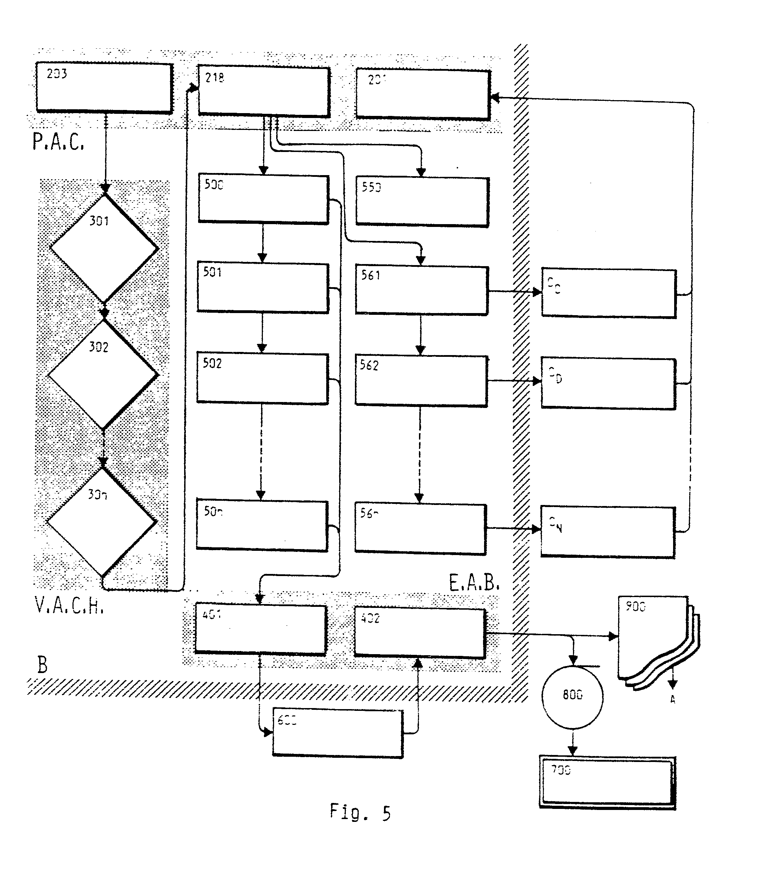

Le moyen de vérification de la compatibilité hiérarchique 300 et le moyen de contrôle de la cohérence entre les données et les éléments significatifs de la codification 400 seront décrits ci-après à l'aide de la figure 5.

Le moyen 300 comporte en entrée une fonction 203 qui calcule la valeur correspondant à l'intégralité des données formant le message. Cette fonction 203 est reliée aux fonctions de niveau 301, 302...30n dans lesquelles chaque valeur est confrontée à la valeur correspondante précédemment enregistrée. La comparaison se fait avec les niveaux de boîtes aux lettres 500, 501, 502...50n également représentés dans cette figure ainsi que les niveaux 560, 561, 562...56n de la file d'attente 550.

Le moyen 400 comporte la fonction 401 qui décrypte les paquets du données et leur codification et la fonction 402 qui émet, d'une part, les bordereaux individuels de chaque utilisateur et, d'autre part, périodiquement, un bordereau général de la messagerie sur bandes, disques ou microfilms.

De façon plus détaillée, la mise en oeuvre des fonctions décrites ci-dessus à l'aide de la figure est la suivante :

La figure 5 représente l'organigramme des moyens V.A.C.H. 300 et E.A.B. 400 :

- La fonction 203 calcule les valeurs correspondant à l'intégralité des données formant le message. Celles-ci sont ensuite confrontrées aux valeurs correspondantes des différents niveaux de la boîte aux lettres de l'utilisateur. A chacun des niveaux 301, 302 ... 30n, chaque valeur est confrontée avec la valeur correspondante précédemment enregistrée.

- Si à l'un de ces niveaux, une incompatibilité est constatée, la fonction 218 est actionnée pour mettre le message en file d'attente 550.

- Si au contraire, la compatibilité est établie à tous les niveaux, la fonction 218 bascule les données soit dans la fonction 500, soit dans la fonction 560 selon que le centre B peut ou non émettre, l'accusé de réception final.

Dans le premier cas, la fonction 218 entérine les modifications intervenues aux niveaux 501, 502 ... 50n de la boîte aux lettres de l'utilisateur à la suite de l'acceptation du nouveau message. Dans le deuxième cas, ces modifications sont stockées dans les niveaux 561, 562 ... 56n de la file d'attente 560. Dans ce dernier cas, le centre du niveau 1000 qui émet les accusés de réception finaux des paquets de données est impulsé par le niveau correspondant de la file d'attente 560. Tous les niveaux de cette file sont alors intégrés dans la messagerie 500, dès que les données et leur codification sont repassées par le P.A.C. comme cela a été décrit ci-dessus.

- Dès l'achèvement des opérations au niveau de la messagerie 500, un duplicata de la nouvelle situation de la boîte aux lettres de l'utilisateur est basculé dans la mémoire 600 selon un mode de communication unidirectionnel, mémoire 500 vers mémoire 600.

- L'ensemble E.A.B. comporte deux fonctions principales :

. La fonction 401 qui décrypte les paquets de données et leur codification. Elle compare les éléments significatifs du code aux éléments correspondants intégrés aux données. Toute divergence révèlerait par conséquent l'intervention frauduleuse d'un tiers non autorisé, la fonction 401 alertant immédiatement la surveillance du sytème.

. La fonction 402 émet d'une part les bordereaux individuels de chaque utilisateur, et, d'autre part, périodiquement, un bordereau général de la messagerie sur bande, disque ou microfilm, que est mis en coffre 700 dans les conditions de sécurité requises.

- La fonction 401 peut se situer soit avant, soit après la mémoire 600. Dans le premier cas, la solution optimale serait qu'elle fonctionne en temps réel entre la mémoire 500 et la mémoire 600 de sorte que toute intrusion intempestive dans le centre B serait immédiatement détectée. La mémoire 600 contiendrait alors l'intégralité de la messagerie 500 entièrement décryptée. Dans le second cas, la fonction 401 pourrait n'être impulsée que par périodes. Une intrusion non autorisée dans le centre B aurait ainsi le temps d'entraîner des dommages conduisant à l'annulation de toutes les opérations faites entre deux impulsions de cette fonction 401. A l'inverse, la mémoire 600 serait la copie intégrale de la mémoire 500, cryptage compris.

Techniquement, les processeurs intégrant les ensembles F.A.D., P.A.C. et V.A.C.H. contrôlent l'accès au centre B par une, deux ou plusieurs portes, selon que la densité moyenne des données traitées par le dispositif est plus ou moins élevée dans l'ensemble des communications avec les utilisateurs. L'ensemble des processeurs formant l'E.A.B. de leur côté ne contrôlent en principe qu'une seule sortie.

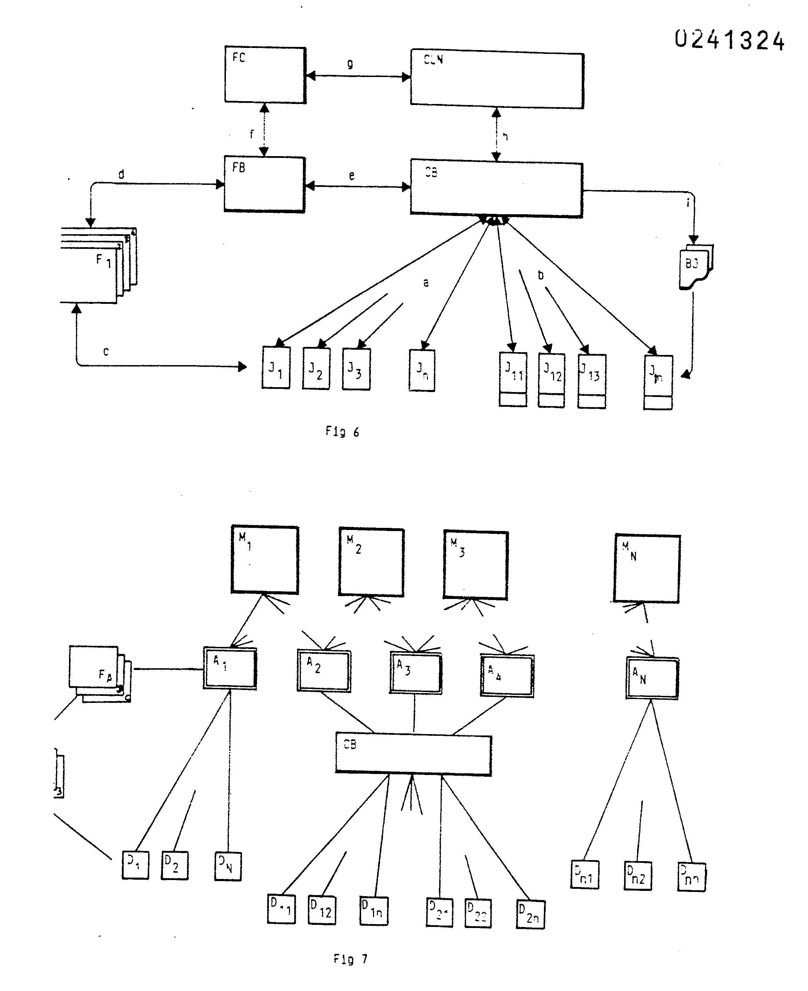

Deux applications particulières de l'invention telle que décrite ci-dessus, seront exposées ci-après à l'aide des figures 6 et 7.

La figure 6 illustre un premier exemple de réseau dans le cadre duquel l'invention considérée trouve son application. Elle représente un réseau alimentant un centre CLN d'une loterie à numéros (centre de niveau 1000). Une association concessionnaire de la société de loterie gère le centre CB (centre B prépondérant). Les flux de la trésorerie de l'association sont traités par le centre FB (centre de niveau 1000) de la banque de l'association. La banque de la loterie est l'établissement FC. Les banques des parieurs individuels sont les banques $F_1$, $F_2$, ... $F_N$. Les parieurs $J_1$, $J_2$ ... $J_n$ disposent chacun d'un minitel. Les parieurs $J_{11}$, $J_{12}$, ... $J_{1n}$ de leur côté, disposent chacun d'un minitel équipé d'un lecteur de carte à mémoire : les communications b entre ces derniers et le centre C.B. se trouvent ainsi cryptées. Les parieurs transmettent leurs enjeux au centre CB et y consultent leur boîte aux lettres :
- lorsqu'ils ont adhéré à l'association qui leur attribue un code individuel,
- lorsqu'ils font créditer leur compte personnel auprès de l'association afin que les mises correspondant à leurs enjeux puissent être débitées.

Ils utilisent à cette fin les liaisons a et b du réseau commuté et éventuellement du réseau de transmission par paquets. Les parieurs peuvent dialoguer avec leurs banques respectives $F_1$, $F_2$ ... $F_N$ par des liaisons c. Ces banques dialoguent avec le centre FB par des liaisons d. Le centre FB crédite le centre FC des mises correspondant aux enjeux des parieurs et il est crédité à son tour du montant de leurs gains par la liaison f. Le centre CLN enregistre les mises et fait créditer le montant total des gains par la liaison g. Le centre CB transmet les enjeux et il est evisé des résultats des tirages par la liaison h. Enfin, le centre CB émet avant chaque tirage un bordereau général de l'ensemble des transactions gérées par le centre B et des bordereaux individuels BJ pour les parieurs $J_1$ à $J_n$ qui en font la demande. Les liaisons a et b passent obligatoirement par le réseau commuté et éventuellement un réseau de transmission de données par paquets. La fluidité du système requiert de préférence des connexions en temps réel. Les liaisons c et d sont celles préexistant à la création du centre CB. Enfin, les contraintes relatives aux liaisons f et g sont celles liées à la fréquence des tirages de la loterie. Dans le système représenté par la figure 6, l'application de l'invention apporte les sécurités nécessaires à la gestion du centre CB et aux transmissions par les liaisons a et b. Il serait très coûteux en effet pour les responsables du système que des erreurs se glissent dans les chiffres des enjeux. Il serait également malencontreux que des fraudes puissent être commises dans les boîtes aux lettres. Les liaisons e et f peuvent faire l'objet des mêmes sécurités offertes par l'invention. Ces sécurités peuvent s'étendre aux autres liaisons dans la mesure où elles utilisent le réseau commuté, des liaisons dédiés ou un autre mode de transmission.

La figure 7 illustre de manière très schématisée un deuxième exemple de réseau auquel l'invention apporte les sécurités indispensables. Des investisseurs dotés de terminaux avec ou sans lecteur de carte à mémoire ($D_{11}$, $D_{12}$ ... $D_{1n}$ ; $D_{21}$, $D_{22}$ ... $D_{2n}$ ; .. ; $D_{n1}$, $D_{n2}$ ... $D_{nn}$) donnent des instructions à leurs agents de change respectifs ($A_1$, $A_2$, ... $A_n$) soit directment, soit, pour certains agents de change, par l'intermédiaire d'un centre CB. Les agents de change exécutent ces instructions sur les marchés $M_1$, $M_2$, ... $M_n$. Les flux correspondant à ces transactions peuvent faire intervenir leurs banquiers $F_1$, $F_2$ ... $F_n$ et ceux des agents de change $F_A$, $F_B$ ... $F_N$. La gestion des boîtes aux lettres individuelles des investisseurs est d'une complexité plus grande que dans le cas de la figure 1, car elle doit tenir compte, pour ne citer que quelques facteurs, de la nature des ordres, de délais, de la composition et de la valeur des portefeuilles, des disponibilités diverses des investisseurs, des pouvoirs donnés dans chaque cas à l'agent de change. Cette gestion ne peut tolérer d'erreurs, accidentelles ou intentionnelles. Le procédé et le dispositif de la présente invention résolvent ce problème avec les garanties nécessaires.

## Revendications

1°) Système de transmission de données caractérisé en ce qu'il se compose d'au moins un clavier 20 et un processeur 30 doté d'une mémoire et, le cas échéant, d'un module de cryptage pour la transmission des données formant un terminal A à la disposition d'un utilisateur et un centre de traitement B relié au terminal A et se composant d'un moyen de filtrage automatique des données, dont une partie peut être assumée par le processeur 30 si la commodité l'impose, et de demande de duplicata 100 (F.A.D.), d'un moyen de codification automatique avec accusé de réception 200 (P.A.C.), d'un moyen de vérification de la compatibilité hiérarchique 300 (V.A.C.H.), d'une file d'attente 550 reliée au moyen de vérification de la compatibilité hiérarchique V.A.C.H. 300 et reliée en sortie au moyen de codification automatique avec accusé de réception P.A.C. 200, le moyen de vérification V.A.C.H. 300 étant relié à la messagerie électronique 500 communiquant elle-même avec les centres destinataires ou satellites 1000 et une mémoire 600 alimentant un moyen de contrôle de la cohérence entre les données et les éléments significatifs de la codification 400 (E.A.B.) pour permettre soit l'émission automatique de bordereaux d'authentification 900 soit un enregistrement de sauvegarde 800 destiné à être mis dans un coffre-fort 700.

2°) Système selon la revendication 1, caractérisé en ce que le moyen de filtrage automatique des données et de demande de duplicatas F.A.D. 100 se compose de la fonction d'entrée $B_1$ reliées au terminal A et de la fonction d'entrée $B_3$ reliées à d'autres parties du centre de traitement B ; les fonctions de décryptage et d'identification $B_1$ recevant les demandes du terminal A et la fonction $B_3$ recevant la demande d'une autre partie du centre de traitement B pour vérifier la cohérence et l'autorisation de divulgation sont respectivement reliées à une fonction de triage 101, dédoublée pour la clarté du graphique, communiquant à une fonction de tronçonnement de données 102 qui fournit des paquets de données à des registres tampon 109, 110, 111 de niveaux différents par l'intermédiaire de fonctions de répartition 103, 107, 108 ainsi qu'une fonction de génération d'impulsions 104 reliée à un compteur 105, représenté sur le graphique dans ses deux positions possibles, lui-même relié à une fonction d'émission 106 reliée à la fonction de vérification de la cohérence du message de départ avec un éventuel cryptage $B_4$, les registres tampon 109, 110, 111 étant reliés à un comparateur 112 dont la sortie est reliée à une fonction de triage 113 qui, lorsque la comparaison est correcte, fournit un signal à la fonction de remise à l'état initial 117 de l'ensemble du moyen F.A.D. 100 pour commander la fonction de reconstitution du message 114 et transmettre l'information au moyen de codification automatique et d'accusé de réception P.A.C. 200 ainsi qu'à la fonction de confirmation du message 115, elle-même reliée à la fonction de cohérence $B_4$, alors que la sortie du comparateur en cas de comparaison négative est reliée à la fonction de demande de duplicata 116, elle-même reliée à la fonction d'émission 106, étant entendu que les fonctions 102 à 113 peuvent être assumées par le processeur 30 qui décharge ainsi par voie de conséquence le F.A.D. 100 situé dans le centre B.

3°) Système selon la revendication 1, caractérisé en ce que le moyen de codification automatique et d'accusé de réception P.A.C. 200 se compose en entrée d'une fonction de triage 201 qui reçoit les signaux de la fonction de filtrage automatique 100, de la file d'attente 550 ou d'un centre satellite 1000, pour envoyer suivant leur origine les signaux ainsi reçus suivant trois chemins de transmission de signaux, à une fonction 202 recevant les informations en provenance de la fonction de filtrage 100, et qui fournit des impulsions de codification par paquets de données à une fonction de calcul de valeurs 203 dont la sortie est reliée à la fonction de vérification de la compatibilité hiérarchique 300 ainsi qu'à la fonction de cryptage des données 216, la fonction 202 étant également reliée à une fonction 206 qui précise le numéro de cycle pour l'algorithme de cryptage, cette fonction 206 étant reliée en sortie à un registre 207 pour la date et éventuellement l'heure du message, le moyen de codification P.A.C. 200 comportant également un horodateur 204 commandant le registre 207 ainsi qu'un compteur de cycle 205, le compteur de cycle commandant une fonction d'initialisation de l'algorithme de cryptage de codification 213 et une fonction d'initialisation de l'algorithme de cryptage de données 214, ces deux fonctions 213 et 214 étant reliées à un algorithme de cryptage 215, lui-même relié à la fonction de cryptage des données 216, le compteur de cycle 205 étant également relié à la fonction 209 qui exprime la durée de validité en cycles de fonctionnement, et qui est reliée à la fonction de triage des ordres 208, ainsi qu'une fonction 210 qui insère dans la codification un critère d'éxécution destiné à être mis en oeuvre par un centre destinataire 1000, cette fonction 210 étant également reliée à la fonction de triage des ordres 208 pour alimenter une fonction 211 qui attribue un numéro d'ordre, elle-même reliée à une fonction 212 qui attribue à chaque paquet de données l'accusé de réception définitif, les fonctions 215, 212 étant reliées à une fonction de cryptage 217 qui crypte le code selon l'algorithme de cryptage 215, pour fournir les données à une fonction d'assemblage 218 qui reconstitue le message complet, ce dernier étant envoyé à la messagerie électronique 500, à la file d'attente 550 ou à une file d'attente cyclique 560.

4°) Procédé pour la mise en oeuvre du système selon l'une quelconque des revendications 1 à 3, pour réaliser les liaisons entre un centre de traitement de données et les terminaux auxquels il est connecté, caractérisé en ce que :

a) on vérifie que les données essentielles du dialogue entre les terminaux et les centres correspondent exactement à celles émises par leurs sources,

b) on codifie ces données selon des critères dont certains doivent être significatifs, on crypte la codification selon un algorithme aléatoire pouvant varier à chaque cycle de fonctionnement du système, on crypte éventuellement les données selon un algorithme différent du précédent,

c) on vérifie que ces données peuvent être acceptées soit immédiatement soit après un délai d'attente par le centre de traitement, compte tenu des containtes régissant le fonctionnement du système,

d) on alerte le système de surveillance du centre de traitement lorsqu'une tierce partie modifie ou s'approprie par effraction les données du centre,

e) on produit les pièces authentifiant les transactions entre le centre et les terminaux afin que les instructions données par les utilisateurs du système no donnent pas lieu à des litiges.

5°) Procédé selon la revendication 4, caractérisé en ce que, pour vérifier les données essentielles du dialogue entre les terminaux et les centres afin qu'elles correspondent exactement à celles émises par leurs sources, on compare les données d'un message original avec celles du message dupliqué une ou plusieurs fois, le centre de traitement B commandant, par impulsions, l'instruction de duplication à une fonction intégrée au centre B ou à une fonction intégrée au processeur 30, on fait répéter cette instruction jusqu'à ce que la comparaison d'une paire de messages original et duplicata unique ou duplicatas successifs, ne présente plus aucune divergence.

6°) Procédé selon l'une quelconque des revendications 4 et 5, caractérisé en ce que, on compose un numéro de code et d'appel sur le terminal de l'utilisateur.

7°) Procédé selon la revendication 4, caractérisé en ce que, pour codifier les données selon des critères dont certains doivent être significatifs et pour crypter la codification selon un algorithme aléatoire variant à chaque cycle de fonctionnement du système et, éventuellement, pour crypter les données selon un algorithme différent de celui de la codification, on associe un code à un paquet de données en intégrant dans la codification certains éléments significatifs figurant dans les données, tels que la date d'émission, la durée de validité, l'identité de l'émetteur et du récepteur, un accusé de réception émis par le centre de traitement lui-même ou par un autre centre destinataire de l'environnement du système.

8°) Procédé selon la revendication 7, caractérisé en ce que lorsque les données doivent n'être accessibles à aucun tiers, on crypte aussi les données mais de manière différente du cryptage du code.

9°) Procédé selon la revendication 4, caractérisé en ce que, pour vérifier que les données peuvent être acceptées soit immédiatement, soit après un délai d'attente par le centre de traitement compte tenu des contraintes de fonctionnement du système, on teste la compatibilité de ces données ainsi que les effets des instructions qui les accompagnent avec les données et les disponibilités d'exécution déjà enregistrées et on poursuit le traitement en l'absence d'incompatibilité alors qu'en cas d'incompatibilité on met les données et leur codification en attente.

10°) Procédé selon la revendication 4, caractérisé en ce que pour alerter le système de surveillance du centre de traitement qu'une tierce partie modifie ou s'approprie par effraction les données du centre, on compare les éléments significatifs du code crypté avec les éléments correspondants des données cryptées selon une méthode différente et on vérifie par cette comparaison s'il y a eu effraction en vue de modifier ces éléments ou de s'approprier les données.

11°) Procédé selon la revendication 4, caractérisé en ce que pour produire les pièces authentifiant les transactions entre le centre et les terminaux afin que les instructions données par les utilisateurs du système n'occasionnent pas de litige, on émet des bordereaux authentifiant les transactions du système.

Fig. 1

Fig. 2

Fig. 3

Fig. 4

Fig. 5

0241324

Fig 6

Fig 7